# NEW EUROPEAN PATENT SPECIFICATION

(11) **EP 1 884 386 B2**
(45) Date of publication and mention of the opposition decision: **08.08.2018**
(45) Mention of the grant of the patent: 30.03.2011
(21) Application number: 07113042.1
(22) Date of filing: 24.07.2007
(51) Int. Cl.: B60J 7/06

(54) **Actuating system for a covering canvas**
Betätigungssystem für eine Abdeckleinwand
Système d'actionnement pour une bâche de couverture

(30) Priority: 24.07.2006 IT TV20060133
(43) Date of publication of application: 06.02.2008
(60) Divisional application: 09155577.1
(73) Proprietor: Marcolin S.r.l., 33170 Pordenone (IT)
(72) Inventor: Amato, Davide, 33070, Pordenone (IT)
(74) Representative: Citron, Massimiliano

(56) References cited:
- EP-A- 1 529 671
- DE-U1- 20 303 238
- US-A- 5 102 182
- US-A- 5 429 408
- US-A- 6 142 554

## Description

The present invention concerns an actuating system for a covering canvas, in particular for lorry containers or stationary containers.

It is known that after purchase the uncovered containers of lorry containers or stationary containers for containing excavation waste are very often equipped with a covering canvas. The canvas is supported by transversal ribs that run along the edges of the container hauled by a system of cables. The sliding ribs allow the canvas to be closed (container covered by the canvas) or opened (canvas and ribs packed on the side of the container opposite the rear door). Examples of these devices with a canvas are described in US 5,145,230, US 5,253,914, US 6,435,595, WO96/33882 and EP1228912.

Substantially these devices can be divided into 2 groups: i) those with a through shaft with two cable loops or ii) those with a single cable. In the first support brackets (or means) for a drive shaft are arranged on the short side of the container, close to the driver's cab, said drive shaft actuating a drive pulley at each of its ends to move in total two cable loops that run along the long sides of the container. In the second, on the other hand, a single cable ring is used, sending it all around the container with return pulleys and crossing them over in at least one point to obtain two portions of cable that run in the same direction. In both cases two portions of cable with movement in the same direction are obtained to which the feet of the ribs are fixed.

These devices have some drawbacks. The presence of the rear door of the container means that the actuation means of the cables have to be arranged on the opposite short side, i.e. the one close to the driver's cab. Very often, however, the construction of lorries does not offer sufficient space to contain the bulk of additional installations between cab and container. Some containers, at said side, have large vertical reinforcement bars, which are laboriously perforated for the passage of the drive shaft or the cables, or else numerous return pulleys must be arranged to go around them. Other containers, again on said side, can have the housing for the spare wheel, a vertical piston to lift the container, a material unloading crane or a raised projecting edge, all elements that prevent the cable from moving rectilinearly or the arrangement of a drive shaft. It should be understood that in all these cases, which can also be encountered in combination, to install a canvas for covering the container it is necessary to modify the container or, at least, to use lots of means and time to adapt the covering device to it. EP 1 529 671 A shows an actuating system according to the preamble of claim 1.

The present invention has the main object of making an actuating system for a covering canvas that does not have the described drawbacks.

Such an object is obtained with an actuating system having the features of claim 1.

The support structure is suitable for being applied and fixed on top of the container, added afterwards.

In some the system comprises transversal ribs, to support the canvas, the feet of which rest and slide upon the edges of the container.

A very advantageous option of the invention is obtained if the structure is arranged to comprise motor means to generate the rotary driving force to be transferred to the drive pulleys through the transmission means, which makes the actuating system compact and efficient. Said motor means can simply comprise at least one motor and/or a motor reducer (electric, pneumatic, oleodynamic, etc.) and/or a manual actuation mechanism (bevel gear, linkages, etc.) to manually generate the rotary driving force. The or each motor can be fixed to the support structure with any known means, for example welding or bolting to a support bar. It is clear that the arrangement on the support structure of just the transmission means leaves a large amount of freedom in design regarding where to position the motor means, i.e. on the structure itself or on the container. Indeed, given that the transmission means, once the support structure has been fitted onto the container, have a fixed position, it is very simple to arrange the motor means (with or without manual actuation) in the support structure and/or on the container, so that the transmission means can be coupled with them, and this irrespective of the size and variant embodiments of the canvas or of the container.

At least one drive pulley is rotatably coupled with said support structure is advantageous, since then the structure becomes a mechanised unit completely independent from the components present on the container and a complete and autonomous functional unit (above all if it comprises the motor means). It is sufficient to mount it onto the container and couple the corresponding cable loops to be moved with the drive pulleys, with a substantial saving in installation time and maintenance. Preferably said structure comprises two support elements, brackets or *ad hoc* shaped plates, which are arranged on opposite edges of the container and on which elements at least one drive pulley is rotatably pivoted.

Said structure comprises a frame that extends transversally to the container and is suitable for being removably fixed on top of the container. The support elements can be integrated and/or fixed to this frame, so as to have a single piece that can be mounted quickly and simply. There are transversal ribs to support the canvas. At least one rib firmly connected to said structure supports the canvas and avoids any discontinuity in the serial structure of the ribs on the container.

A simple but effective solution is obtained if the transmission means comprise a transmission shaft rotatably mounted on said structure and transversally to the container. To reach the drive pulleys it is possible to divide the transmission shaft into segments and articulate them with one or more cardan joints. Moreover, the transmission shaft can be very easily coupled with the pulleys with a pinion engaged in a toothing of the drive pulleys. Other systems (belts, chains, linkages, etc.) are in any case possible. It can also be considered to use distinct motor means for each of the drive pulleys so as to be able to make them rotate independently from each other, in which case synchronisation means can be foreseen to synchronise the rotation of the drive pulleys and have controlled movement.

Another optional variant is to use telescopic elements for carrying out said structure, in order to make it easily adaptable to lorries and containers of different width.

Another optional variant is to use section bars for the structure's frame, so that the canvas may be easily fixed by pressure on a section bar. This is possible since the typical concave shaping of the section bar is exploited to insert and fix the canvas thereat. In other words, said structure may comprise section bars its frame, so that the canvas may be easily fixed into a concave section thereof.

All these designing options are of course usable alone or in combination.

In any case, the advantages of the invention shall be made clearer from the following description of an example embodiment, illustrated in the attached drawing, where:
fig. 1 shows a side view of a container equipped with an actuating system according to the invention;
fig. 2 shows a section view according to the plane I-I of fig. 1;
fig. 3 shows an enlarged view of the content of the dashed circle of fig. 2;
fig. 4 shows an enlarged view of the content of the dashed oval of fig. 1;
fig. 5 shows a variant of the invention;
fig. 6 shows a lateral view of another variant of the invention;
fig. 7 shows a view from above of the variant of fig. 6;
fig. 8 is a partially exploded tridimensional view of the variant of fig. 6;

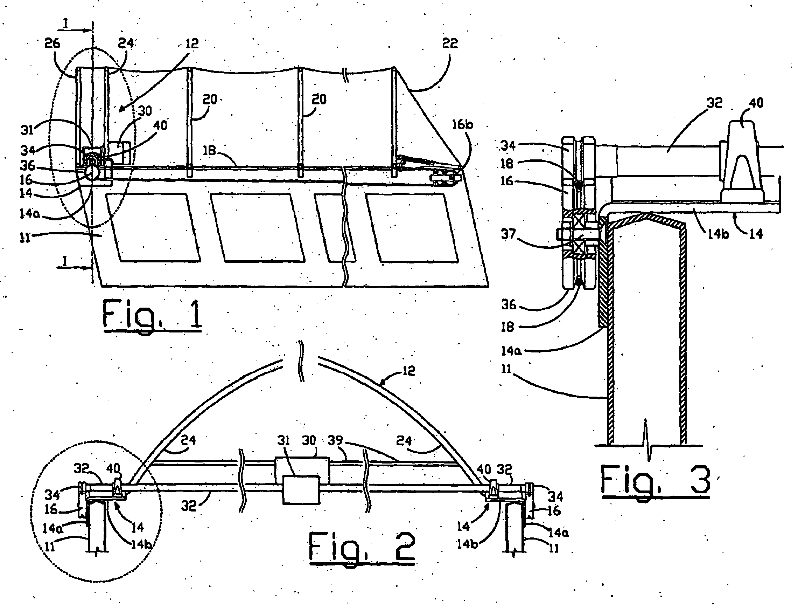

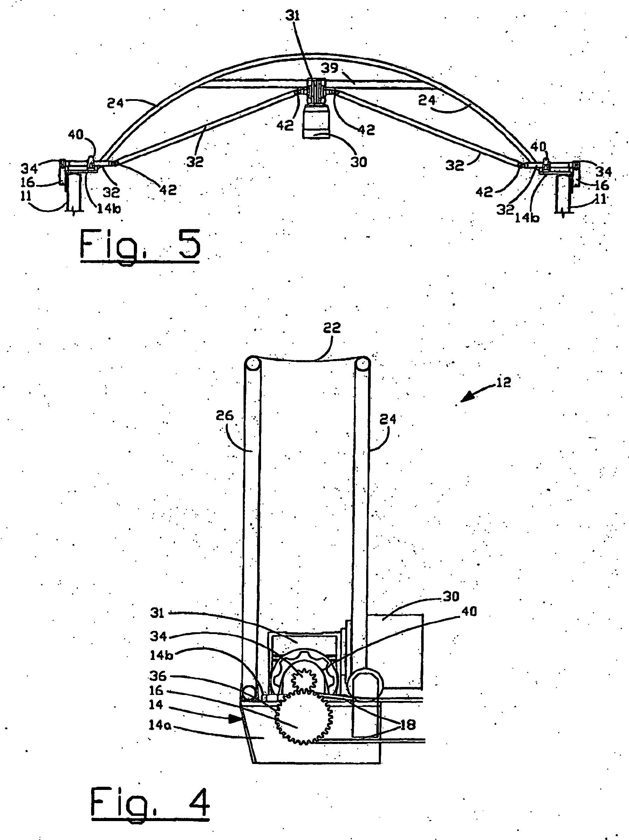

A first embodiment of the actuating system object of the invention is shown in fig. 1 and comprises a support structure 12 (within the dashed oval of fig. 1 and shown individually and enlarged in fig. 4) that has two L-shaped base plates 14 at the ends (see fig. 3). The plates 14 are made so as to each be able to be removably fixed on top of an edge of a container 11 (for example of a lorry), and for this purpose - see fig. 3 - they have two flat segments 14a, 14b perpendicular to one another, the second of which that is horizontal is fixed (with screws, welding or other) to the edge of the container 11. Alternatively the segment 14a can be fixed to the container 11. On segment 14a, which is vertical, a drive pulley 16 is rotatably hinged on which a cable ring 18 is engaged (shown with a dashed line in fig.1). The ring 18, which also engages on an idle pulley 16b, has mobile ribs 20 suitably fixed to it, which, moving on top of the container 11, haul a canvas 22 for covering the container 11.

The structure 12 comprises two arched ribs 24, 26 that are fixed to the sides of each segment 14b of the plates 14, and are arranged transversally to the container 11. The ribs 24, 26 - both allow the support structure 12 to be applied quickly and simply to the container 11 with a single operation, and provide an excellent static attachment point for the canvas 22. In order to fixedly connected together the plates 14 it is also possible to use, for example, a bar, or else to integrate the plates 14 in a cross-member with inverted U-shaped section to be installed straddling both the edges of the container 11 as a bearing frame. To do this it is necessary for the extension of the bar or of the cross-member to be at least the width of the container 11. As can be seen the structure 12 has a substantially symmetrical construction, given that in the example we have to consider the presence of two identical loops 18, one for each side of the container 11. In embodiments with a single hauling ring 18 on one side of the container 11 only one pulley 16 is needed, and the mechanics of the structure 12 is correspondingly modified.

A motor 30 is fixed to one of the ribs 24, 26 (or both), through a bar 39. At the centre of the segments 14b, inside the bearings 40, a transmission shaft 32 is rotatably fixed that receives a rotation movement from the motor 30 through known coupling means 31 (for example a motor reducer and/or a bevel gear) and transfers it to both of the drive pulleys 16 through two end pinions 34, each engaged on a peripheral toothing 36 of the pulleys 16 themselves.

The transmission shaft 32 is mounted on the structure 12 on top of and transversally to the container 11. It is clear that the shaft 32 advantageously allows the rotation of the drive pulleys 16 to be actuated synchronously, using a single motor. It is possible to use other synchronisation means (for example mechanical means like chains or belts) and/or a motor for each pulley 16. In this way it is possible to avoid having a shaft that crosses the container 11; and numerous cable turns from the single available drive pulley are avoided with a single motor without the transmission shaft. In the case of an independent motor for each pulley, the synchronisation means can be electronic, like for example an electronic control unit that detects and processes the angular position of the shaft of the motors and/or of the drive pulleys. By using motors with matching characteristics and suitable adjustment the synchronisation means can be left out.

Other variants are in any case possible, see fig. 5, where the same reference numerals are used for parts the same as those already described. It can be foreseen to fix the motor 30 (for example again with a cross-member or bar 39) to other points of the structure 12 (for example at a higher point of the ribs 24, 26) and connect it to the pulleys 16 with segments of transmission shaft 32 articulated by one or more cardan joints 42. The bulky arrangement of the shaft 32 flush with the container 11, that could be a disadvantage for certain loads or containers, is thus prevented. It is also possible to foresee, as an alternative to or at the same time as the motor 30, the manual actuation of the pulleys 16. The transmission members of the motion to the pulleys 16 can be shared by the motor 30 and by the manual motor means, with a saving of components and greater efficiency.

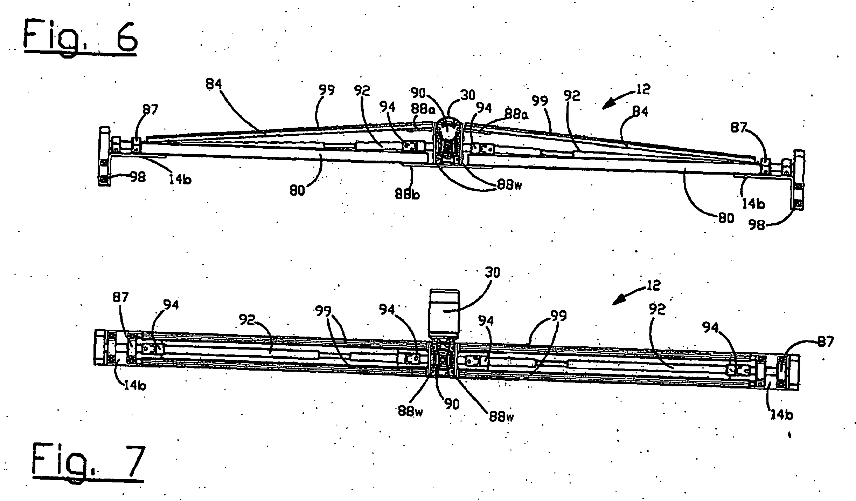

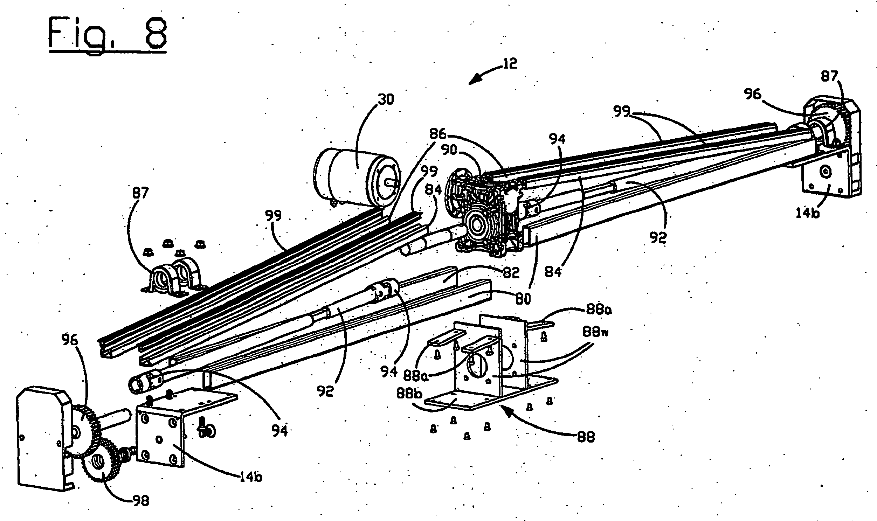

Another variant is shown in fig. 6, 7 and 8. Same reference numerals are used here for parts the same as those already described and having the same functions.

The actuating system in fig. 6 comprises a symmetric support structure 12, for each side made of two telescopic bars 80, 82 and two section bars 84, 86. All these bars are fixed in a stable configuration. The bars 80, 82 are centrally screwed to a base plate 88b of a central support 88, while the bars 84, 86 are fixed to flanges 88a thereof.

At their opposite ends the bars 80, 82 are fixed to an L-shaped plate 14b, and the bars 84, 86 are fixed in known manner to the top of the bars 80, 82.

A motor 30 is arranged on the support 88, between two vertical walls 88w thereof (the support 88 has the shape of an inverted pi), and connected to a mechanical transmission 90 which is able to transmit a rotary movement from the motor's output shaft to two lateral telescopic shafts 92 provided with cardan joints 94. The shafts 92 end with a hubbed toothed driving pulley 96 engaging a driven pulley 98 on which a loop of cable (not shown) is wound about. Proper rolling action for the shafts 92 is assured by support bearing 87 mounted on the plate 14b.

The section bars 84, 86 are concave in shape (upwards), and they have a section resembling a "U". In the void central space of the bars 84, 86 an elongated insert 99 (preferably in plastics) can be fitted. Since the bars 84, 86 are common ware in the market they can be purchased and then easily cut to a desired length.

The provision of the bars 80, 82 and the shafts 92 has the advantage of making the structure 12 adjustable to a given lorry's width. The bars 84, 86 are fitted (and fixed) afterwards by proper tailoring.

The provision of the bars 84, 86 has the advantage that the canvas may be attached to the structure 12 in a simple way: its edge is folded into the concavity provided by the bars 84, 86 and then fixed thereto by superimposing the insert 99, which can be screwed or fitted by a snap-connection. Note that the front-to-back symmetry of the structure 12 allows the canvas to be connected at both of its sides, front and rear.

These advantages are of course extendable to the other described variants, by using the same designing techniques.

## Claims

1. Actuating system for a canvas (22) for covering containers (11) of vehicles or fixed containers for waste materials,
wherein the canvas (22) is hauled by one or more cable loops (18) set in motion by drive pulleys (16) that transfer to them the motion necessary to move the canvas (22),
the actuating system comprising an independent functional unit in the form of a support structure (12) comprising drive pulleys (16) and transmission means (21, 32, 42) to transmit a rotary driving force to the drive pulleys (16),
wherein at least one drive pulley (16) is rotatably coupled with said structure (12),
**characterized in that**
the support structure (12) is adapted, in use, for being superimposed and fitted on top of the container (11) after the production of the container, so that the transmission means (21, 32, 42) are mounted on the support structure (12) on top of and transversally to the container (11),
said structure (12) comprising a frame (24, 26) that extends transversally to the container (11) and is suitable for being removably fixed on the top of the container,
said frame comprising at least one rib (24, 26) fixedly connected to it and mounted to support the canvas (22),
wherein the canvas (22) is supported by transversal ribs (20) the feet of which rest upon and slide on the edges of the container (11) hauled by the one or more cable loops (18).

2. Actuating system according to claim 1, wherein said structure (12) comprises two support elements (14) suitable for being arranged on opposite edges of the container (11) and on which elements (14) at least one drive pulley (16) is rotatably hinged.

3. Actuating system according to claim 2, wherein said support elements (14) comprise two L-shaped base plates (14) at the ends, said plates (14) being made so as to each be able to be removably fixed on top of an edge of a container and having two flat segments (14a, 14b) perpendicular to one another, wherein the horizontal segment may be fixed on the edge of the container (11), and the vertical segment (14a) is adjacent the container and has a drive pulley (16) rotatably pivoted on it.

4. Actuating system according to any one of the previous claims, wherein the structure (12) comprises motor means (30) to generate the rotary driving force.

5. Actuating system according to claim 4, wherein at least one motor (30) is fixed to at least one rib (24, 26) firmly connected to the support structure (12).

6. Actuating system according to any one of the previous claims, wherein the transmission means (21, 32, 42) are coupled with manually actuated motor means to manually generate the rotary driving force, wherein the manually actuated motor means are associated with the support structure (12).

7. Actuating system according to any one of the previous claims, wherein the transmission means comprise a transmission shaft (32) rotatably mounted on said structure (12) and transversally to the container (11).

8. Actuating system according to claim 7, wherein the transmission shaft (32) comprises one or more cardan joints (42).

9. Actuating system according to claims 7 or 8, comprising coupling means (34) for transmitting rotation movement from the transmission shaft (32) to the drive pulleys (16).

10. Actuating system according to claim 9, wherein the transmission shaft (32) at the ends is coupled with a pinion (34) mounted in engagement with a toothing (36) provided on the drive pulleys (16).

11. Actuating system according to claim 9, wherein the transmission shaft (32) is coupled with the drive pulleys (16) by means of belts, chains or linkages.

12. Actuating system according to any one of the previous claims, comprising distinct motor means for each drive pulley so as to be able to make it rotate independently from the others and comprising synchronization means (32) to synchronize the rotation of the drive pulleys.

13. Actuating system according to any one of the previous claims, comprising section bars for the structure's frame, so that the canvas may be easily fixed into a concave section thereof.

## Patentansprüche

1. Betätigungssystem für eine Plane (22) zum Abdecken von Behältern (11) von Fahrzeugen oder von ortsfesten Behältern für Abfallmaterialien,
bei dem die Plane (22) von einer oder mehreren Seilschleifen (18) geschleppt wird, die durch Antriebsscheiben (16) in Bewegung versetzt werden, die auf diese die zum Bewegen der Plane (22) erforderliche Bewegung übertragen,
wobei das Betätigungssystem eine unabhängige Funktionseinheit in Form einer Tragkonstruktion (12) umfasst, die Antriebsscheiben (16) und Übertragungsmittel (21, 32, 42) zum Übertragen einer Drehantriebskraft auf die Antriebsscheiben (16) umfasst,
wobei mindestens eine Antriebsscheibe (16) drehbar mit der Konstruktion (12) verbunden ist,
**dadurch gekennzeichnet, dass**
die Tragkonstruktion (12) dazu geeignet ist, beim Gebrauch nach der Erzeugung des Behälters so auf die Oberseite des Behälters aufgesetzt und montiert zu werden, dass die Übertragungsmittel (21, 32, 42) über dem Behälter (11) und quer zu ihm auf die Tragkonstruktion (12) montiert sind,
wobei die Konstruktion (12) einen Rahmen (24, 26) umfasst, der sich quer zum Behälter (11) erstreckt, wobei der rahmen dazu geeignet ist, lösbar auf der Oberseite des Behälters befestigt zu werden,
wobei der Rahmen mindestens eine starr mit ihm verbundene und zum Tragen der Plane (22) montierte Rippe (24, 26) umfasst, und bei dem die Plane (22) von Querrippen (20) getragen Wird, deren Fuße auf den Rindern des Behälters (11) aufsitzen und geschleppt von der einen oder den mehreren Seilschleifen (18) gleiten.

2. Betätigungssystem nach Anspruch 1, bei dem die Konstruktion (12) zwei Tragelemente (14) umfasst, die dazu geeignet sind, auf gegenüberliegenden Rändern des Behälters (11) angeordnet zu werden, und wobei an diesen Elementen (14) mindestens eine Antriebsscheibe (16) drehbar abgelenkt ist.

3. Betätigungssystem nach Anspruch 2, bei dem die Tragelemente zwei L-förmige Basisplatten (14) an den Enden umfassen, wobei die Platten (14) so ausgeführt sind, dass jede auf der Oberseite eines Rands eines Behälters lesbar befestigt sein kann und zwei zueinander perpendikulare flache Segmente (14a, 14b) aufweist, wobei
das horizontale Segment auf dem Rand des Behälters (11) befestigt sein kann, und das vertikale Segment (14a) am Behälter anliegt und eine drehbar schwenkbare Antriebsscheibe (16) auf ihm aufweist.

4. Betätigungssystem nach einem der vorherigen Ansprüche, bei dem die Konstruktion (12) Motormittel (30) zum Erzeugen der Drehantriebskraft umfasst.

5. Betätigungssystem nach Anspruch 4, bei dem mindestens ein Motor (30) an mindestens einer fest mit der Tragkonstruktion (12) verbundenen Rippe (24, 26) befestigt ist.

6. Betätigungssystem nach einem der vorherigen Ansprüche, bei dem die Übertragungsmittel (21, 32, 42) mit handbetätigten Motormitteln gekoppelt sind, um die Drehantriebskraft von Hand zu erzeugen, wobei die handbetätigten Motormittel mit der Tragkonstruktion (12) verbunden sind.

7. Betätigungssystem nach einem der vorherigen Ansprüche, bei dem die Übertragungsmittel eine Kardanwelle (32) umfassen, die drehbar und quer zum Behälter (11) auf die Konstruktion (12) montiert ist.

8. Betätigungssystem nach Anspruch 7, bei dem die Kardanwelle (32) eines oder mehrere Kardangelenke (42) umfasst.

9. Betätigungssystem nach Anspruch 7 oder 8, bei dem die Kardanwelle (32) Kupplungsmittel (34) zum Verbinden mit den Antriebsscheiben (16) umfasst.

10. Betätigungssystem nach Anspruch 9, bei dem die Kardanwelle (32) an den Enden mit einem Ritzel (34) verbunden ist, das in Eingriff mit einer auf den Antriebsscheiben (16) vorgesehenen Verzahnung (36) montiert ist.

11. Betätigungssystem nach Anspruch 9, bei dem die Kardanwelle (32) mit Hilfe von Riemen, Ketten oder Gestängen mit den Antriebsscheiben (16) verbunden ist.

12. Betätigungssystem nach einem der vorherigen Ansprüche, das individuelle Motormittel für jede Antriebsscheibe umfasst, so dass es in der Lage ist, sie unabhängig von den anderen zu drehen, und das Synchronisationsmittel (32) zum Synchronisieren der Drehung der Antriebsscheiben umfasst.

13. Betätigungssystem nach einem der vorherigen Ansprüche, das Profilstangen für den Rahmen der Konstruktion umfasst, so dass die Plane in einfacher Weise in einem konkaven Querschnitt derselben befestigt werden kann.

## Revendications

1. Système d'actionnement pour une toile (22) pour couvrir des containers (11) de véhicules ou des containers fixes pour des déchets, dans lequel la toile (22) est tractée par un ou plusieurs câbles en boucle (18) entraînés par des poulies motrices (16) qui leur transmettent leur mouvement nécessaire pour déplacer la toile (22),
le système d'actionnement comprenant une unité fonctionnelle indépendante sous la forme d'une structure de support (12) comprenant des poulies motrices (16) et des moyens de transmission (21, 32, 42) pour transmettre une force motrice de rotation aux poulies motrices (16), dans lequel au moins une poulie motrice (16) est couplée de manière rotative à ladite structure (12),
**caractérisé en ce que**
la structure de support (12) est adaptée, en service, pour être superposée et fixée sur le dessus du container après la production du container, de manière que les moyens de transmission (21, 32, 42) soient montés sur la structure de support (12) sur le dessus et transversalement au container (11),
ladite structure (12) comprendant un châssis (24,26) qui s'étend transversalement par rapport au container (11), dans lequel ledit châssis est adapté pour être fixé de manière amovible sur le dessus du container,
ledit châssis comprendant au moins une nervure (24, 26) connecté de manière fixe à celui-ci et montée pour supporter la toile (22),
la toile (22) etant supportée par des nervures transversales (20) dont les pieds reposent et coulissent sur les bords du container (11), tractée par les un ou plusieurs câbles en boucle (18).

2. Système d'actionnement selon la revendication 1, dans lequel ladite structure (12) comprend deux éléments de support (14) adaptés pour être agencés sur des bords opposés du container (11) et sur lesquels éléments (14) est articulée de manière rotative au moins une poulie motrice (16).

3. Système d'actionnement selon la revendication 2, dans lequel lesdits éléments de support comprennent deux plaques de base en forme de L (14) aux extrémités, lesdites plaques (14) étant conçues de manière que chacune soit en mesure d'être fixée de manière amovible sur le sommet d'un bord d'un container et comportant deux segments plats (14a, 14b) perpendiculaires entre eux, dans lequel le segment horizontal peut être fixé sur le bord du container (11), et le segment vertical (14a) est adjacent au container et a une poulie motrice (16) pivotée de manière rotative sur celui-ci.

4. Système d'actionnement selon l'une quelconque des revendications précédentes, dans lequel la structure (12) comprend des moyens moteurs (30) pour générer la force motrice de rotation.

5. Système d'actionnement selon la revendication 4, dans lequel au moins un moteur (30) est fixé à au moins une nervure (24,26) solidement connectée à la structure de support (12).

6. Système d'actionnement selon l'une quelconque des revendications précédentes, dans lequel les moyens de transmission (21, 32, 42) sont couplés avec des moyens moteurs actionnés manuellement pour générer manuellement la force motrice de rotation, dans lequel les moyens moteurs actionnés manuellement sont associés à la structure de support (12).

7. Système d'actionnement selon l'une quelconque des revendications précédentes, dans lequel moyens de transmission comprennent un arbre de transmission (32) monté de manière rotative sur ladite structure (12) et transversalement par rapport au container (11).

8. Système d'actionnement selon la revendication 7, dans lequel l'arbre de transmission (32) comprend un ou plusieurs joints à cardan (42).

9. Système d'actionnement selon les revendications 7 ou 8, dans lequel l'arbre de transmission (32) comprend des moyens d'accouplement (34) pour l'accouplement avec les poulies motrices (16).

10. Système d'actionnement selon la revendication 9, dans lequel l'arbre de transmission (32) est couplé à ses extrémités avec un pignon (34) monté en engagement avec une denture (36) prédisposée sur les poulies motrices (16).

11. Système d'actionnement selon la revendication 9, dans lequel l'arbre de transmission (32) est couplé avec les poulies motrices (16) au moyen de courroies, chaînes ou liaisons.

12. Système d'actionnement selon l'une quelconque des revendications précédentes, comprenant un moyen moteur distinct pour chaque poulie motrice de manière à pouvoir le faire tourner indépendamment des autres et comprenant des moyens de synchronisation (32) pour synchroniser la rotation des poulies motrices.

13. Système d'actionnement selon l'une quelconque des revendications précédentes, comprenant barres profilées pour le châssis de la structure, de manière que la toile puisse être facilement fixée dans une section concave de celles-ci.
